# EUROPEAN PATENT APPLICATION

(11) **EP 2 393 269 A1**
(43) Date of publication of application: **07.12.2011**
(21) Application number: 11167365.3
(22) Date of filing: 24.05.2011
(51) Int. Cl.: H04M 3/428, H04M 3/436

(54) **Context aware call purpose announcement**

(30) Priority: 04.06.2010 US 802315
(71) Applicant: Mitel Networks Corporation, Ottawa, ON K2K 2W7 (CA)
(72) Inventor: Davies, Jim, Amprior Ontario K7S 3G7 (CA); Nagaraj, Vn, Phoenix, AZ 85085 (US); Ostrowski, Paul, Chandler, AZ 85249 (US)
(74) Representative: Venner Shipley LLP

(57) **Abstract**

A system and method for providing a context aware call purpose announcement is disclosed. The method comprises receiving a telephone call from a calling party to a called party on a digital telephony network. An operational state of the called party's telephone is identified. The calling party is enabled to create a custom message for the called party when the operational state of the called party's telephone is identified as busy. The custom message is delivered to the called party through the digital telephony network to enable the called party to determine whether to receive the telephone call from the calling party.

## Description

### Background

The ability to communicate in the 21 st century has become nearly ubiquitous. However, at selected times it is desirable to limit communication options to provide focus. At these times, analogue phones can be placed off-hook. Modern digital phones can be silenced a number of ways, including activating a do not disturb feature that blocks all callers or using selective screening that only allows certain callers through.

While blocking or limiting communication for a selected party can be an effective way to reduce distractions, it can also reduce efficiency. When an important communication is needed for the selected party, and the party is not receiving phone calls, the breakdown in communication can reduce efficiency, at best, with the potential for serious problems if the communication cannot be made in a timely manner.

### Brief Description Of The Drawings

Features and advantages of the invention will be apparent from the detailed description which follows, taken in conjunction with the accompanying drawings, which together illustrate, by way of example, features of the invention; and, wherein:
Figure 1 illustrates a block diagram of a context aware call purpose announcement system in accordance with an embodiment of the present invention;
Figures 2 illustrates a block diagram of a context aware call purpose announcement system in accordance with an alternative embodiment of the present invention; and Figures 3 depicts a flow chart of a method for providing a context aware call purpose announcement in accordance with an embodiment of the present invention.

Reference will now be made to the exemplary embodiments illustrated, and specific language will be used herein to describe the same. It will nevertheless be understood that no limitation of the scope of the invention is thereby intended.

### Detailed Description

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification have been labelled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as defacto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of materials, fasteners, sizes, lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

### Definitions

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical range endpoint by providing that a given value may be "a little above" or "a little below" the endpoint.

As used herein, the term "context aware" is the ability to determine when a phone or phone line is busy.

As used herein, the term "busy" refers to a phone or phone line that is blocked or filtered in such a way that a calling party is not able to directly communicate with a called party.

As used herein, the term "custom call purpose announcement" is a custom message created by a calling party through a system available on the called party's digital telephony network when the calling party's phone is determined to be busy. Since the custom call purpose announcement message is only created when the operational status of the called party phone is determined as busy, the custom call purpose announcement message is also referred to as a busy announcement.

### Example Embodiments

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter. The following definitions are provided for clarity of the overview and embodiments described below.

The ability to block or limit incoming phone calls on a telephone can be useful at certain times. However, limiting communication can also lead to unintentional consequences if an important and/or time sensitive communication is blocked. It typically cannot be determined in advance whether each person that is blocked may have an important need to communicate with the user of the blocked telephone. Thus, the use of blocking and filtering of incoming phone calls can lead to inherent inefficiencies and reduce the effective practice of business.

In order to lessen the risks involved with blocking and filtering of incoming phone calls, a system and method for providing a context aware call purpose announcement is disclosed. When the calling party is not able to directly communicate with the called party it is hereinafter referred to as the called party having a phone or a phone line that is "busy".

When the called party's phone is busy when the calling party places a phone call, then the calling party can be given an option to create a custom message for the called party. The custom message can be created to provide a call purpose announcement to the called party. The custom message can be delivered to the called party in a way that can limit interruptions. For example, if the called party is already on his or her telephone conversing with a third party, the custom call purpose announcement message can be sent as a "whisper announce" (i.e. a message that only the called party can hear). In this example, the third party on the phone call with the called party will not be able to hear the call purpose announcement. The called party can then determine, using the information provided in the call purpose announcement, whether to interrupt the current phone call to answer the incoming phone call.

The ability to create a custom call purpose announcement message enables the calling party to communicate with the called party even when the called party's phone is busy. The custom message can provide the called party with sufficient information to make an informed decision as to whether to answer an incoming phone call from the calling party. This enables the called party to use features such as "do not disturb" or selected filtering of incoming phone calls on his or her telephone, while minimizing the probability of missing important information from a phone call.

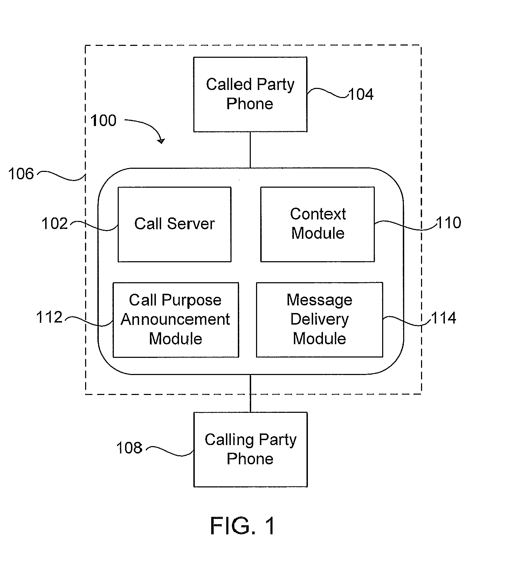

FIG. 1 illustrates an example system 100 for providing a context aware call purpose announcement in accordance with one example embodiment of the present invention. The system comprises a call server 102 configured to be connected to at least one called party telephone 104 in a digital telephony network 106. A called party telephone is any phone within the digital telephony system operable to receive a phone call. The phone call from a calling party 108 may originate from another telecommunications device that is connected to the call server 102 and located within the digital telephony network 106. Alternatively, the phone call may originate from a telephone located outside the digital telephony network. For example, the calling party telephone may be connected to the public switched telephone network (PSTN) or another digital telephony network. The calling party can communicate with the called party through the call server 102.

The system 100 further comprises a context module 110 in communication with the call server 102. The context module is configured to determine an operational state of the called party's telephone. The operational state is a determination as to whether the calling party is capable of communicating directly with the called party through the called party's phone, as previously discussed. If the calling party cannot directly communicate with the called party using the called party's phone 104 then the operational status of the called party's telephone is listed as busy. This determination can be made in a number of different ways. This will be discussed more fully below.

The system 100 includes a call purpose announcement module 112 that is in communication with the context module 110. The call purpose announcement module is configured to enable the calling party to create a custom message for the called party when the operational state of the called party's telephone is identified by the context module 110 as busy.

The system 100 further comprises a message delivery module 114 that is in communication with the call purpose announcement module 112. The message delivery module is configured to deliver the custom message to the called party through the digital telephony network 106 to enable the called party to determine whether to receive the telephone call from the calling party.

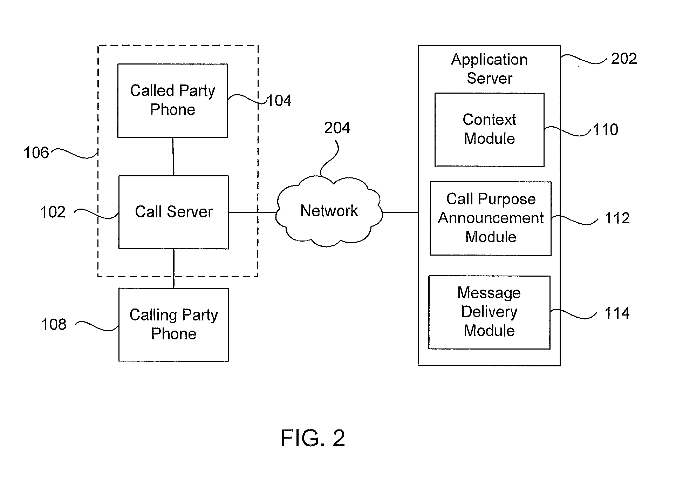

In one embodiment, the various modules in the system 100 can operate on the call server 102. Alternatively, the modules can operate on a separate server, such as an application server that is in communication with the call server. The application server may be located within the digital telephony network 106 or outside the digital telephony network. For instance, FIG. 2 illustrates an example of an application server 202 located outside the digital telephony network 106. The application server is in communication with the call server 102 of the digital telephony network 106. The call server may be a private branch exchange (PBX) type server or a packet switched internet protocol (IP) type of server. At least one of the context module 110, the call purpose announcement module 112, and the message delivery module 114 can operate on the application server 202. The application server can communicate with the call server 102 through a network 204. The connection with the network 204 may be wired or wireless. The network can be a local area network (LAN), a wide area network (WAN), an internet connection, and the like. One or more of the modules 110, 112, 114 may also be located on additional servers. Alternatively, one or more of the modules 110, 112, 114 can operate on the call server 102. In one embodiment, the modules can operate in a virtual environment on the call server. A more detailed description of the function and operation of the modules will now be provided.

In a traditional plain old telephone system (POTS), the busy state of a telephone occurs when the called party's telephone is off the hook. This typically occurs when the called party is engaged in an active conversation or has left the telephone off the hook to prevent phone calls from being received.

The use of digital telephony, such as internet protocol (IP) telephony, has greatly expanded the concept of the busy state. For instance, a called party may enable a "Do Not Disturb" (DND) feature to prevent interruptions from incoming phone calls. When this feature is activated, the digital telephony system emulates the permanent off-hook status of the POTS system.

When the phone is considered to be off the hook then the POTS will return an audible busy tone and a busy indication in trunk signalling. For digital telephony systems, the called party may enable a number of features that will dispose of selected incoming phone calls. These phone calls may be redirected without returning a busy signal to the calling party. For example, the called party may direct an incoming call to his or her voicemail box through the use of a feature such as Call Forward on Busy (CFB). Digital telephony systems can also be used to provide selective call forward features in which only certain calls are redirected, such as forwarding the selected calls to voicemail. Rules can be set up so that certain calls are put through to the called party and others are directed away from him or her. These features can use data related to the caller identity as well as the current context of the called party to determine when phone calls should be redirected.

Accordingly, a number of different features and states can redirect a call away from a called party. Any state in which the calling party is redirected away from the called party is presumed to result in a determination that the operational state of the called party phone 104 is busy.

A determination of the operational state of the called party phone 104 can be achieved using a number of different techniques, as can be appreciated. The busy state can be determined by the detection of certain classes of calls or through the facilitation of certain features in the digital telephony network. For instance, when a called party telephony device is used in an active conversation and a busy indication is received through the trunk signal, a determination can be made that the operational state of the called party's phone is busy.

In another embodiment, a busy state can be determined if the CFB feature redirects the incoming call to another person or device, such as a personal assistant or a voicemail box. If the incoming call is redirected to a person then the person may alert the called party of an urgent call. If the call is redirected to voicemail then the communication in an urgent call may be lost or delayed. Thus, in one embodiment then the system 100 can be configured to provide the option for the calling party to create a custom call purpose announcement message when the incoming phone call is redirected through CFB to a non-human entity, such as voicemail or a recording.

In a more complex digital telephony system that provides selective call forwarding, a rule system can be created that is used to differentiate incoming calls into multiple classes. One class of phone calls is eligible to create a custom call purpose announcement when the operational state of the called party's phone is determined to be busy. Another class of call is not eligible to create a custom call purpose announcement and will be directed away from the called party. A called party can set up the rule system by creating a list of phone numbers of calling parties that are allowed to create the custom call purpose announcement.

Additional features can be added to the classes that enable calls from selected parties to be redirected based on an indicated busy state of the called party. For instance, a called party can assign each party in his or her rule system an importance indicator, such as a number from one to nine. When the called party activates a busy feature, such as the DND feature or the CFB feature, the called party can also set the importance indicator. If the called party does not want to be disturbed, except in extreme emergencies, then a relatively high importance indicator, such as eight or nine may be selected. Only those calling parties that have an importance indicator greater than eight will be allowed to create a custom call purpose announcement message. All other calling parties that are not listed in the rule system, or that have an importance indicator less than eight can be redirected as desired, such as to a personal assistant, voice mail, a recording, or a busy signal. If the called party wishes to filter only calls of relatively low importance, then the DND or CFB feature can be activated with a lower importance level, such as an importance level of five. This enables any calling party included in the rule system with an importance level of five or greater to record a call purpose announcement message in the event that the operational state of the called party's phone is identified as busy.

In one embodiment, the busy state can be reported to the calling party system by the called party system through reporting of the busy state during a call setup negotiation. The calling party can attempt to set up a call to the called party. This typically occurs when the calling party dials the called party's phone number. The called party system, such as the call server in the digital telephony network, will assess the call and determine that the called party's phone is in the busy state. This will then be reported to the calling party system. In the example embodiment of Figures 1 and 2, the status of the called party's phone can be reported to the context module 104.

In another embodiment, the digital telephony system of the called party can publish the operational state of the called party's phone. The state of the called party's phone can be published prior to receiving any phone calls. The publication may be made generally, as in the case of traditional Instant Messaging (IM) status publication. The publication may also be specific in that a specific caller may subscribe to the called party's busy status. In one embodiment, the context module can evaluate the busy state depending on the identity of the calling party. The busy state can then be published to the calling party's system. Thus, publication of the called party's operational state (i.e. status) can be provided in response to a query from the calling party or in response to a general or continuing subscription to the called party's operational state.

Digital telephony networks, such as IP networks, can use headers assigned to each packet of data transmitted over the network. The headers can be used in a digital telephony network for call authentication, call setup and so forth. For instance, digital telephony networks can use the session initiation protocol (SIP) header to setup a phone call. One such protocol is the RFC 3261 protocol that identifies specific header information. Additional information can be added to the header that is used to identifying the existence of and a location of a custom call purpose announcement message. For example, a custom call purpose announcement header can include a recording of the announcement in text or voice.

Alternatively, the header can include a URL that points to a source of the custom call purpose announcement message. When an invite is received and the context module determines that the called party line is busy and the call is eligible to create a custom call purpose announcement, the presence or non-presence of the custom call purpose announcement header can be checked. If the custom call purpose announcement header is present then the custom call purpose announcement can be presented to the called party for his or her consideration. If no custom call purpose announcement header is present then the call can be rejected or redirected with a special response code. This code can indicate that the called party is in a busy state and that the proposed call has been determined to be eligible to create a custom call purpose announcement message. The calling party system can use this as an indication that it can request the calling party to create a custom call purpose announcement message. While header information has been discussed with respect to the session initiation protocol, the header information can also be included in other types of digital telephony systems, as can be appreciated.

The called party system, such as the example systems displayed in Figures 1 and 2 can determine the operational state of the called party phone before a proposed call is negotiated. The operational status can be determined through the use of a general or specific publication of the called party state. Alternatively, a specific indication can be received by the called party system during call negotiation with the calling party. In either event, a calling party is typically unaware of how the called party busy state is determined. The called party system can determine the called party state either before or after call setup negotiation. For example, the call purpose announcement module 112 can provide the calling party 108 with the option of entering a custom call purpose announcement when the context module 110 determines that the called party phone 104 is busy. This will be transparent to the calling party.

Once the operational state of the called party phone 104 has been determined, the call purpose announcement module 112 can present the calling party with the option of entering or recording a custom call purpose announcement message. Since the custom call purpose announcement message is only created when the operational status of the called party phone 104 is determined as busy, the custom call purpose announcement message is also referred to as the busy announcement.

In one embodiment, the calling party can be given the option of abandoning the phone call without creating a busy announcement. The calling party can also be given the option of creating the busy announcement in either a voice or text format. The method of creating the busy announcement may depend on the type of communication device that the calling party is using. Some devices, such as analogue telephones, have only a limited capacity for entering a text message. Other devices, such as smart phones, portable computers, and so forth, can include a full keyboard that enables text messages to be quickly entered. In one embodiment, the calling party can be offered the option of recording the busy announcement in either a text or a voice format. In another embodiment, only a single format may be offered, such as text or voice. The type of format offered can depend on the abilities of the calling party's phone 108.

In one embodiment, the call purpose announcement module 112 is configured to offer the calling party to create the busy announcement by selecting from one or more prerecorded busy announcements. The prerecorded busy announcements are standard announcements that can be of use in specific situations. For example, the prerecorded announcement may be for an urgent meeting, a customer consultation, or an emergency communication with the called party.

The calling party may select a prerecorded announcement using a keypad on the calling party's phone. The prerecorded message can be prepended or appended with a brief identification of the caller. The identification may be recorded personally by the calling party. Alternatively, information available to the called party's digital telephone network may be used, such as caller ID information. Thus, rather than requiring the calling party to create a unique busy announcement, the calling party can select a prerecorded announcement with the calling party's identification added to it. This may result in an announcement delivered to the called party such as "Bob Jones + 'requests an urgent meeting'. 'Would you like to take the call?'" Another example announcement can be "'Important sales call from' + Jim Davies". Any type of suitable announcement can be created or recorded. The identity of the called party may be added to the prerecorded announcement using a text to speech converter.

In another embodiment, the calling party can create a custom busy announcement message. The custom busy announcement message may be stored to enable the calling party to use the same message at a later date. The calling party may create multiple different busy announcement messages that can be accessed for later use when placing a telephone call to the called party, or another phone within the called party's digital telephony network. By recording the busy announcement in the calling party's own voice, it can more effectively draw the attention of the called party.

There are a number of different ways in which the busy announcement is presented to the user. Two major classes for presentation of the busy announcement can be defined based on whether or not the called party is on an active phone call. If the called party is on an active phone call and in conversation with a third party, one way of presenting a busy announcement is through the use of a "whisper announce". A whisper announce is a message that is sent to only one party of a multi party phone call. In this case, the busy announcement will be provided to the called party, but will not be heard by the third party or any other parties to the phone call. This may be done by momentarily setting a one way connection to the called party to play the busy announcement. In addition, the called party can be presented with a conferenced summation of the busy announcement. The busy announcement can also be a text message that is displayed on the called party's phone or another type of computer device connected to the call server. In addition, an audio recording and a text message can both be sent to the called party's telephone. The text message can be displayed on the called party's telephone display, providing either redundant or additional information from the audio recording.

The length of the busy announcement can be limited to a selected time period, such as three seconds. By limiting the busy announcement to a relatively short time period, the announcement can be delivered while minimizing the interruption of the ongoing phone call. The busy announcement may be played a single time or multiple times for the called party. For example, the busy announcement may be played twice, with a three second interval between each announcement. This enables the called party to clarify the message if it was not understood the first time. Upon hearing the busy announcement, the called party can then choose to answer the incoming phone call.

If the called party is not on an active phone call then the busy announcement can be presented using a speaker phone. For instance, an incoming phone call from a calling party may be set to be redirected to voice mail. However, due to the urgency of the phone call, the calling party chooses to create a busy announcement. The busy announcement can then be played via the called party's speaker phone speaker. Alternatively, the busy announcement may be directed to an additional computing device used by the called party, such as a desktop computer, laptop computer, or mobile computing device such as a smart phone, cell phone, or other type of wireless communication device.

Through the use of speech recognition and text to speech converters, the called party can control the modality in which the busy announcement is presented. The calling party can choose to send either a voice or text message. The called party can select the modality that he or she desires to receive the busy announcement. The appropriate converter can then be used to match the busy announcement provided by the calling party with the called party's preference for receiving the busy announcement.

Upon the reception of a busy announcement, the called party can indicate his or her decision on how the incoming call associated with the busy announcement should be handled. For instance, the called party may do nothing, thereby ignoring the request to answer the incoming call. Alternatively, the called party may proactively respond. For instance, message delivery module 114 can be configured to stop presenting the busy announcement if the called party presses a predetermined key on his or her phone.

If the called party does not accept the call then the calling party may be provided with the standard busy handing that would have occurred if no busy announcement had been created. Alternatively, the calling party can be presented with an announcement indicating that his or her phone call has not been accepted. This announcement may contain an explanation of how the call will be dealt with. For instance, the announcement may explain that the call will be forwarded to another person, forwarded to voice mail, sent to a recording, and so forth.

The same type of response can be made if the called party is not participating in an active phone call. For instance, if the called party has selected the "do not disturb" button on his or her phone, and a busy announcement is played on the called party's speaker phone or computing device, then the called party can actively stop the busy announcement, ignore the busy announcement, or choose to answer the phone in view of the busy announcement.

Various options for the called party to respond to the busy announcement from the calling party can be displayed in the called party's telephone display. Alternatively, the options for responding can be presented in text on a video display associated with the call, as previously discussed. The options include connecting to the incoming caller while leaving the existing call(s) on hold, conferencing the incoming caller into the existing call, forwarding the incoming call to voicemail or another party, providing the incoming caller with one or more prerecorded messages, rejecting the incoming call to follow the normal busy signal treatment, and so forth. The options can be selected through voice, DTMF key, keyboard, touch screen, or other means of selection.

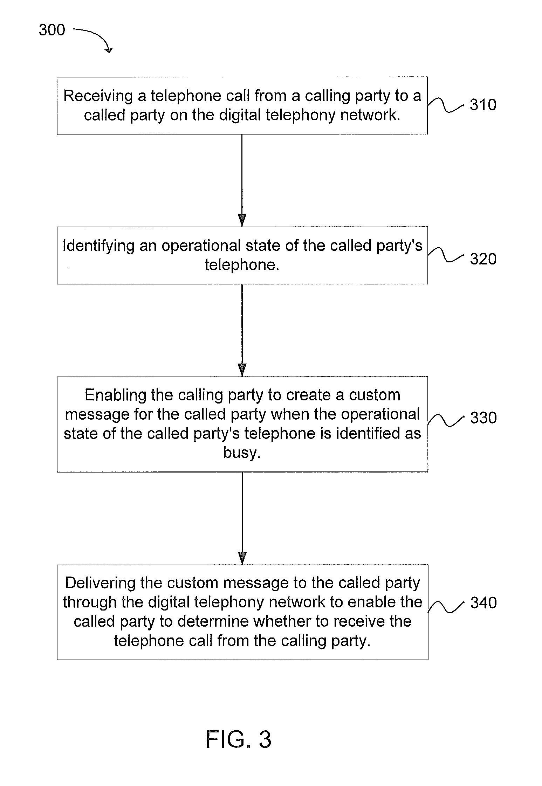

In another embodiment, a method 300 for providing a context aware call purpose announcement is disclosed, as depicted in the flow chart of FIG. 3. The method includes receiving 310 a telephone call from a calling party to a called party on a digital telephony network. While the called party is using the digital telephony network, the calling party may be using any type of telephony network, such as the same digital telephony network as the called party, a different digital telephony network, or a PSTN telephony network. An operational state of the called party's telephone is identified 320.

When the operational state of the called party's telephone is identified as busy then the calling party is enabled 330 to create a custom message for the called party. The creation of the custom message can be accomplished using software and/or firmware available in the called party's digital telephony network. The software and/or firmware can be located on the call server of the digital telephony network. Alternatively, a separate server, such as an application server in communication with the call server can be used to enable the custom message to be created by the calling party. The custom message is delivered 340 to the called party through the digital telephony network to enable the called party to determine whether to receive the telephone call from the calling party.

While the foregoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A method for providing a context aware call purpose announcement for a telephone call to a called party's telephone connected to a digital telephony network, comprising:
receiving a telephone call from a calling party to a called party on the digital telephony network;
identifying an operational state of the called party's telephone;
enabling the calling party to create a custom message for the called party when the operational state of the called party's telephone is identified as busy; and
delivering the custom message to the called party through the digital telephony network to enable the called party to determine whether to receive the telephone call from the calling party.

2. The method of claim 0, wherein identifying the operational state of the called party's telephone further comprises identifying the operational state of the called party's telephone during a call set up negotiation with the calling party's telephone.

3. The method of claim 0, wherein identifying the operational state of the called party's telephone further comprises publishing the operational state of the called party's telephone prior to receiving the telephone call from the calling party.

4. The method of any preceding claim, further comprising providing a reference to the custom message in a header delivered to the digital telephony system during session initiation.

5. The method of any preceding claim 0, further comprising delivering the custom message as an audio message sent as a whisper announce to the called party's telephone so that only the called party can hear the predetermined message or as a text message to the called party.

6. The method of any preceding claim, further comprising creating a classification group for phone calls incoming to the digital telephony network, wherein a calling party who is identified in the classification group is allowed to create the custom message for the called party.

7. The method of any preceding claim, further comprising assigning each member of the classification group an importance indicator to enable the called party to set a desired importance indicator value at which the member is allowed to create the custom message for the called party.

8. A context aware call purpose announcement system, comprising:
a call server configured to be connected to at least one telephone of a called party located in a digital telephony network;
a context module in communication with the call server and configured to determine an operational state of the called party's telephone;
a call purpose announcement module in communication with the context module and configured to enable a calling party to create a custom message for the called party when the operational state of the called party's telephone is identified by the context module as busy; and
a message delivery module in communication with the call purpose announcement module and configured to deliver the custom message to the called party through the digital telephony network to enable the called party to determine whether to receive the telephone call from the calling party.

9. The system of claim 8, wherein the context module is configured to determine the operational state of the called party's telephone during a call setup negotiation.

10. The system of claim 8 or claim 9, wherein the operational state of the called party's telephone is published for use by the context module prior to receiving a phone call.

11. The system of any of claims 8 to 10, wherein the call purpose announcement module is further configured to provide announcement information in a header of data packets communicated over the digital telephony network, the information identifying an existence and location of the custom message for the called party to enable the message delivery module to deliver the custom message to the calling party.

12. The system of any of claims 8 to 11, wherein the custom message is one of an audio format and a text format.

13. The system of any of claims 8 to 12, wherein the call purpose announcement module is configured to enable the calling party to record an audio message to create the custom message and/or is configured to enable the calling party to select a portion of the custom message from a plurality of prerecorded announcements, and optionally wherein the call purpose announcement module is further configured to add identification information of the calling party to the selected prerecorded announcement to create the custom message.

14. The system of any of claims 8 to 13, wherein the message delivery module is configured to allow the called party to stop the delivery of the custom message and/or to deliver the custom message to the called party through a whisper announce to the called party's telephone and/or to deliver the custom message to a called party device selected from the group consisting of a telephone, a cell phone, a desktop computer, a laptop computer, and a portable computing device.

15. A context aware call purpose announcement system, comprising:
an application server operable to be in communication with a call server configured to be connected to at least one telephone of a called party located in a digital telephony network;
a context module operable to operate on the application server and configured to determine an operational state of the called party's telephone;
a call purpose announcement module in communication with the context module and configured to enable a calling party to create a custom message for the called party when the operational state of the called party's telephone is identified by the context module as busy; and
a message delivery module in communication with the call purpose announcement module and configured to deliver the custom message to the called party through the digital telephony network to enable the called party to determine whether to receive the telephone call from the calling party.
